# EUROPÄISCHE PATENTANMELDUNG

(11) **EP 1 842 703 A1**
(43) Veröffentlichungstag der Anmeldung: **10.10.2007**
(21) Anmeldenummer: 07007163.4
(22) Anmeldetag: 05.04.2007
(51) Int. Cl.: B60H 1/32

(54) **Klimaanlage in einem Kraftfahrzeug**

(30) Priorität: 06.04.2006 DE 102006016166
(71) Anmelder: GM Global Technology Operations, Inc., Detroit, MI 48265-3000 (US)
(72) Erfinder: Gattnar, Gregor, 65468 Trebur (DE)
(74) Vertreter: Daniel, Ulrich W.P.

(57) **Zusammenfassung**

Eine Klimaanlage in einem Kraftfahrzeug weist einen geschlossenen Kältemittelkreislauf, einen Kompressor, einen Verdampfer, eine Drosseleinrichtung, einen Kondensator und ein regulierbares Fahrzeuggebläse auf. Zur Erhöhung des Nutzungskomforts, insbesondere bei hohen Umgebungstemperaturen, ist bei Erreichen eines Grenzwerts eines Kältemitteldrucks im Kondensator die Leistung des Fahrzeuggebläses reduzierbar.

## Beschreibung

Die Erfindung bezieht sich auf eine Klimaanlage in einem Kraftfahrzeug mit einem geschlossenen Kältemittelkreislauf, einem Kompressor, einem Verdampfer, einer Drosseleinrichtung, einem Kondensator und einem mittels Steuerung regulierbaren Fahrzeuggebläse.

Klimaanlagen dienen zur Temperierung und Belüftung eines Innenraums eines Kraftfahrzeugs in einer vom Nutzer gewünschten Weise und umfassen unter anderem einen geschlossenen Kältemittelkreislauf für das Kältemittel, beispielsweise Kohlendioxid. Dabei wechselt das Kältemittel im Kreislauf ständig zwischen flüssigem und gasförmigem Zustand. Somit wird dem Innenraum des Kraftfahrzeugs Wärme entzogen und mit einem Kühlluftstrom nach außen abgegeben. Das Wirkungsprinzip von Klimaanlagen beruht darauf, dass nicht Kälte produziert, sondern der Umgebung Wärme entzogen wird. Dies erfolgt durch das Verdampfen des Kältemittels. In der Klimaanlage wird ein Kompressor üblicherweise vom Motor des Kraftfahrzeugs über einen Riemen angetrieben, saugt das gasförmige Kältemittel aus einem Verdampfer an und verdichtet es auf ca. 15 bar. Dabei steigt die Temperatur des Kältemittels stark an. Vom Kompressor wird der Kältemittelgas zum Kondensator, auch Verflüssiger genannt, gepumpt, der vor dem Motorkühler angeordnet ist. Im Kondensator wird das Kältemittelgas von der Außenluft abgekühlt und dadurch verflüssigt. Die dem Fahrzeuginnenraum entzogene Wärme gelangt somit in die Umgebung. Anschließend wird das flüssige Kältemittel im Trockner oder Sammler gesammelt und von Feuchtigkeit sowie Schmutz befreit. Als Drosseleinrichtung zur Regulierung des Kreislaufs dient in an sich bekannter Weise ein Expansionsventil.

Mit Hilfe eines Fahrzeuggebläses wird Luft angesaugt und an dem üblicherweise lammellenförmig ausgebildeten Verdampfer vorbei in den Fahrzeuginnenraum geblasen, wobei diese Luft am Verdampfer abgekühlt wird.

Hierbei tritt insbesondere unter extremen Umweltbedingungen sowie während einer längeren Leerlaufphase das Problem auf, dass bei einer hohen Kälteleistung des Verdampfers der Kältemitteldruck im Kondensator stark ansteigt, so dass aus Sicherheitsgründen bei Überschreitung eines festgelegten Grenzwerts für diesen Kältemitteldruck die Klimaanlage selbsttätig abgeschaltet oder zur Verringerung des Kältemitteldrucks der Kompressorhubraum reduziert wird. Dies führt unmittelbar zu einer nicht mehr ausreichenden Abkühlung der über das Fahrzeuggebläse geförderten Luft und dementsprechend erhöht sich die Luftausblastemperatur.

Die EP 0 288 658 B1 offenbart ein Verfahren zur Steuerung einer Kraftfahrzeugklimaanlage, bei dem eine Kondensatorleistung durch Änderung des Luftdurchsatzes, das heißt der Stärke, mit der das Fahrzeuggebläse betrieben wird, eingestellt werden kann. Demzufolge kann bei einer Steigerung der Stärke des Fahrzeuggebläses eine größere Luftmenge durchgesetzt werden, die am Kondensator abgekühlt wird und dementsprechend den Innenraum des Kraftfahrzeugs schneller klimatisiert.

Ausgehend von diesem Stand der Technik ist der Fachmann vor die Aufgabe gestellt, eine Klimaanlage der eingangs genannten Art zu schaffen, die den Nutzungskomfort erhöht und ein selbsttätiges Abschalten vermeidet.

Erfindungsgemäß wird die Aufgabe dadurch gelöst, dass eine Steuerung bei Erreichen eines Grenzwerts eines Kältemitteldrucks im Kondensator die Leistung des Fahrzeuggebläses reduziert.

Der Kerngedanke der Erfindung besteht darin, die Leistung bzw. Intensität, mit der das Fahrzeuggebläse betrieben wird, um gekühlte Luft in den Innenraum des Kraftfahrzeugs zu fördern, derart zu regulieren, dass ein Kältemitteldruck im Kondensator der Klimaanlage nicht zu stark ansteigt bzw, einen festgelegten Grenzwert nicht überschreitet. Selbstverständlich sind entsprechende Drucksensoren im Kältemittelkreislauf vorhanden, deren Signale beispielsweise einem zentralen Steuergerät des Kraftfahrzeugs zugeführt werden, von dem das Fahrzeuggebläse entsprechend reguliert werden kann.

Durch die Reduzierung der Fahrzeuggebläseleistung wird der Mengendurchsatz an Luft reduziert, was zu einer Reduzierung der Belastung am Verdampfer führt. Dies hat unmittelbar eine Verringerung des Kältemitteldrucks im Kondensator bzw. im Gaskühler zur Folge, wodurch ein weiterer Anstieg des Kältemitteldrucks, insbesondere auf der Hochdruckseite in Flussrichtung gesehen vor der Drosseleinrichtung, vermieden wird.

Der Vorteil der Erfindung liegt darin, dass ein selbsttätiges Abschalten der Klimaanlage vermieden wird, wobei sich die Temperatur der durch das Fahrzeuggebläse in den Innenraum des Kraftfahrzeugs geblasenen Luft nicht ändert. Es wird lediglich die Menge an geförderter Luft verringert. Sonach ist in einfacher Weise eine Erhöhung zumindest des subjektiven Komforts der Klimaanlage erreicht. Mit einer solchen Klimaanlage kann insbesondere bei hohen Umgebungstemperaturen ein vollständiges Abschalten vermieden werden, um ein Mindestmaß an Kühlleistung aufrecht zu erhalten.

Im Rahmen der Erfindung kann die Fahrzeuggebläseleistung in an sich beliebiger Weise reduziert werden, beispielsweise dadurch, dass ein oder mehrere Lüfter der Klimaanlage abgeschaltet werden und Luft beispielsweise nur noch von einem einzigen Lüfter angesaugt und in den Innenraum des Kraftfahrzeugs gefördert wird. Bevorzugt wird jedoch eine Spannung zur Versorgung bzw. zum Betreiben eines Elektromotors des Fahrzeuggebläses in gewünschter Weise reduziert. Dies erfolgt insbesondere stufenlos, um eine abrupte Änderung der Fahrzeuggebläseleistung zu vermeiden. Geeignete Elektromotoren, die mit unterschiedlichen Spannungen und dementsprechend mit unterschiedlichen Drehzahlen bzw. Förderleistungen zu betreiben, sind dem Fachmann bekannt.

Um einen Nutzer des Kraftfahrzeugs auf den Umstand der Reduzierung der Fahrzeuggebläseleistung hinzuweisen kann dies zusätzlich optisch und/oder akustisch angezeigt werden. Beispielsweise können auf einem Display entsprechende Nachrichten ausgegeben werden oder über die Audioanlage des Kraftfahrzeugs eine entsprechende Sprachmitteilung.

Im Vorhergehenden wurde die Erfindung im Zusammenhang mit einer Klimaanlage in einem Kraftfahrzeug beschrieben. Es ist für den Fachmann jedoch ersichtlich, dass auch alle anderen Arten von Klimaanlagen, beispielsweise für Wohnungen oder Büroräume, mit umfasst sein sollen, um auch bei solchen Klimaanlagen eine Gebläseleistung zu reduzieren, falls ein Kältemitteldruck einen festgelegten Grenzwert erreicht.

Es versteht sich, dass die vorstehend genannten Merkmale nicht nur in der jeweils angegebenen Kombination sondern auch in anderen Kombinationen verwendbar sind. Der Rahmen der Erfindung ist nur durch die Ansprüche definiert.

## Patentansprüche

1. Klimaanlage in einem Kraftfahrzeug mit einem geschlossenen Kältemittelkreislauf, einem Kompressor, einem Verdampfer, einer Drosseleinrichtung, einem Kondensator und einem mittels einer Steuerung regulierbaren Fahrzeuggebläse, **dadurch gekennzeichnet, dass** die Steuerung bei Erreichen eines Grenzwerts eines Kältemitteldrucks im Kondensator die Leistung des Fahrzeuggebläses reduziert.

2. Klimaanlage nach Anspruch 1, **dadurch gekennzeichnet, dass** eine Spannung zur Versorgung eines Elektromotors des Fahrzeuggebläses von der Steuerung reduzierbar ist, insbesondere stufenlos.

3. Klimaanlage nach Anspruch 1 oder 2, **dadurch gekennzeichnet, dass** das Reduzieren der Leistung des Fahrzeuggebläses optisch und/oder akustisch anzeigbar ist.
